(19) Europäisches Patentamt
European Patent Office
Office européen des brevets

(11) EP 2 839 865 A1

(12) # DEMANDE DE BREVET EUROPEEN

(43) Date de publication:
**25.02.2015 Bulletin 2015/09**

(51) Int Cl.:
***A63B 69/38*** $^{(2006.01)}$ ***G09B 19/00*** $^{(2006.01)}$

(21) Numéro de dépôt: **14181479.8**

(22) Date de dépôt: **19.08.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **20.08.2013 FR 1358084**

(71) Demandeur: **BABOLAT VS**
**69007 Lyon (FR)**

(72) Inventeurs:
- **Mace, Pierre**
**69007 Lyon (FR)**
- **Gauthier, Fabien**
**69007 Lyon (FR)**

(74) Mandataire: **Myon, Gérard Jean-Pierre et al**
**Cabinet Lavoix**
**62, rue de Bonnel**
**69003 Lyon (FR)**

(54) **Méthode de calcul d'un paramètre représentatif du niveau technique d'un joueur de tennis**

(57) Cette méthode de calcul d'un paramètre représentatif du niveau technique d'un joueur de tennis lors d'une série de coups comprend des étapes consistant à a) déterminer (101), pour chaque coup exécuté lors de la série de coups, une zone d'impact du coup sur le tamis d'une raquette de tennis que le joueur utilise ; b) déterminer (102), pour chaque coup exécuté lors de la série de coups, le type de ce coup, le type de coup étant choisi parmi une liste (L) comprenant au moins deux types de coups ; c) à partir des zones d'impact déterminées à l'étape a) et des types de coups déterminés à l'étape b) pour la série de coups, déterminer (103) un indice de zone (Zi) pour chaque type de coup de la série de coups ; d) à partir des indices de zone calculés à l'étape c), calculer (104) la valeur du paramètre (P) en utilisant la formule suivante :

$$P = \frac{\sum_{i=1}^{C} Zi \times Ni}{\sum_{i=1}^{C} Ni}$$

où P est le paramètre représentatif, C est le nombre de types de coups, Zi, avec i compris entre 1 et C, est l'indice de zone pour chaque coup, et Ni est le nombre de coup effectués pour chaque type de coup i.

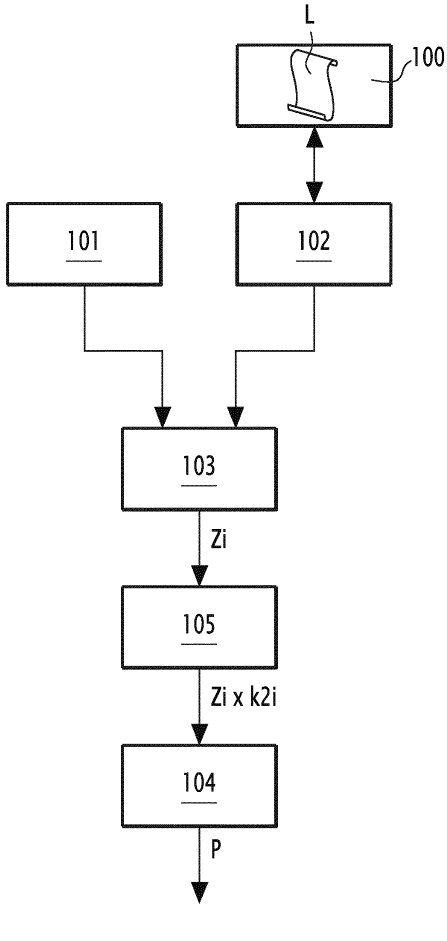


FIG.2

EP 2 839 865 A1

## Description

L'invention concerne une méthode de calcul d'un paramètre représentatif du niveau technique d'un joueur de tennis.

Pour la pratique du tennis, il est avantageux de pouvoir analyser les performances d'un joueur, par exemple dans le but d'évaluer et/ou d'améliorer sa technique de jeu. Le niveau du joueur se caractérise notamment par ses capacités à effectuer des gestes et des frappes de manière reproductible, tout en maîtrisant le plus de types de coups possibles. En effet, plus un joueur aura de maîtrise technique et plus il parviendra, à frapper un même coup avec la même zone du tamis de la raquette.

L'invention propose une méthode de calcul d'un paramètre représentatif du niveau technique d'un joueur de tennis en étudiant la variété et de la régularité des coups exécutés par ce joueur, basée sur des mesures effectuées au cours du jeu.

A cet effet, l'invention a pour objet une méthode de calcul d'un paramètre représentatif du niveau technique d'un joueur de tennis lors d'une série de coups. Cette méthode est caractérisée en ce qu'elle comprend les étapes suivantes :

- a) déterminer, pour chaque coup exécuté lors de la série de coups, une zone d'impact du coup sur le tamis d'une raquette de tennis que le joueur utilise ;
- b) déterminer, pour chaque coup exécuté lors de la série de coups, le type de ce coup, le type de coup étant choisi parmi une liste comprenant au moins deux types de coups ;
- c) à partir des zones d'impact déterminées à l'étape a) et des types de coups déterminés à l'étape b) pour la série de coups, déterminer un indice de zone pour chaque type de coup de la série de coups ;
- d) à partir des indices de zone calculés à l'étape c), calculer la valeur du paramètre en utilisant la formule suivante :

$$P = \frac{\sum_{i=1}^{C} Zi \times Ni}{\sum_{i=1}^{C} Ni}$$

où P est le paramètre représentatif,
C est le nombre de types de coups,
Zi, avec i compris entre 1 et C, est l'indice de zone pour chaque coup, et Ni est le nombre de coup effectués pour chaque type de coup i.

Grâce à l'invention, le joueur de tennis dispose d'un moyen d'appréciation de sa faculté à reproduire les mêmes gestes pour chaque type de coup et de sa maîtrise des différents types de coup du tennis. Plus le joueur parvient à frapper la balle avec la même zone du tamis de la raquette pour chaque type de coup, plus le paramètre a une valeur élevée attestant du niveau technique du joueur.

Selon des aspects avantageux mais non obligatoires de l'invention, une telle méthode peut incorporer une ou plusieurs des caractéristiques suivantes, prises dans toute combinaison techniquement admissible :

- Le paramètre est calculé sur une série de coups comprenant un nombre minimum de coups pour chaque type de coup.
- La liste de types de coups comprend au moins six types de coups.
- La liste de types de coups comprend au moins huit types de coups parmi lesquels : le coup droit à plat, le coup droit lifté, le coup droit slicé, le revers à plat, le revers lifté, le revers slicé, le service à plat et le service avec effet.
- Lorsque pour un ou plusieurs types de coups, le joueur n'a pas exécuté un nombre seuil de coups, le ou les indices de zone correspondant à ce ou ces types de coups est multiplié par un coefficient pondérateur choisi en fonction du nombre de coups exécutés pour ce ou ces types de coup, le coefficient pondérateur étant croissant avec le nombre de coups.
- Le tamis de la raquette est divisé en au moins deux zones, de préférence en cinq zones.
- La méthode comprend, avant l'étape b), une étape préalable consistant à choisir les types de coups de la liste de types de coups.
- Chaque indice de zone est multiplié par un coefficient d'étalonnage permettant de normer cet indice de zone sur une échelle dont la valeur maximale correspond aux performances virtuelles d'un joueur qui frappe tous les coups d'un même type dans la même zone du tamis.
- A l'étape b), le type de coup exécuté est déterminé en fonction des accélérations linéaires et des vitesses angulaires de la raquette.
- A l'étape a), la zone d'impact de chaque coup est déterminée par des mesures de vibrations dans la raquette et/ou en fonction des accélérations linéaires et des vitesses angulaires de la raquette.
- La méthode comprend une étape supplémentaire consistant à calculer la cadence de jeu du joueur pendant la série de coups et à pondérer la valeur du paramètre sur la base de la valeur de la cadence de jeu.
- La méthode comprend une étape supplémentaire consistant à calculer la puissance moyenne développée par le joueur au cours de la série de coups, et à pondérer la valeur du paramètre sur la base de la valeur de la puissance moyenne.

L'invention sera mieux comprise et d'autres avantages de celle-ci apparaîtront plus clairement à la

lumière de la description qui va suivre d'une méthode de calcul conforme à l'invention, donnée uniquement à titre d'exemple et faite en référence aux dessins annexés dans lesquels :

- la figure 1 est une vue de face d'une raquette permettant la mise en oeuvre de la méthode de l'invention ; et
- la figure 2 est un schéma bloc de la méthode de l'invention.

La figure 1 montre une raquette de tennis 1, qui comprend, de manière classique, un manche 2 raccordé à une tête T incluant un cadre 4 à l'intérieur duquel est tendu un tamis 8, formé de différentes cordes transversales et longitudinales. La tête T comprend également deux branches de liaison 6 qui s'étendent de manière divergente depuis le manche 2 vers le cadre 4.

Le manche 2 comprend un corps 21 globalement tubulaire, réalisé par exemple en carbone. De manière classique, le corps 21 est recouvert d'une épaisseur de mousse entourée par un grip, pour améliorer la prise en main du manche. Le corps 21 du manche 2 comporte une extrémité longitudinale proximale 21.1, située du côté du tamis 8 et raccordée aux branches de liaison 6, et une extrémité longitudinale distale 21.2, libre et opposée à l'extrémité 21.1. L'extrémité 21.2 est recouverte par un talon 22, généralement désigné par le terme « butt cap » en Anglais, qui permet à la main du joueur de ne pas glisser hors du manche 2.

La raquette 1 est équipée d'un système de mesure de données de jeu, non représenté, comprenant au moins un capteur de mesure, par exemple un capteur de vibrations. Le système de mesure permet également de déterminer, lors de la frappe d'une balle avec la raquette 1, l'accélération linéaire et la vitesse angulaire de la raquette, selon trois directions perpendiculaires entre elles, fixes par rapport au référentiel terrestre. . Par exemple, le système de mesure peut comprendre un accéléromètre tri-axes et un gyromètre tri-axes.

La suite de la description concerne une méthode de calcul d'un paramètre P représentatif du niveau technique d'un joueur de tennis, au moyen de la raquette 1, qui comprend à cet effet une unité de calcul. Lors d'une série de coups réalisés par le joueur, des données de jeu sont mesurées par le système de mesure et transmises à l'unité de calcul. Les gestes qui ne correspondent à aucun coup, par exemple, lorsque le joueur fait rebondir une balle au sol, sont détectés et ne sont pas pris en compte pour définir une série de coups.

Dans une première étape 101, pour chaque coup exécuté, la zone d'impact de la balle sur le tamis 8 est déterminée en fonction des mesures du capteur de vibrations. Le tamis 8 peut être divisé en plusieurs zones représentées à la figure 1 : une zone centrale M1 globalement rectangulaire, et quatre zones périphériques M2, M3, M4 et M5 qui divisent la partie restante du tamis 8 en quatre zones. Une zone M2 est située dans le prolongement de la zone centrale M1 selon l'axe du manche 2 vers l'extrémité du cadre 4 opposée au manche 2, une zone M3 est située à l'opposé de la zone M2 par rapport à la zone centrale M1 selon l'axe du manche 2 c'est-à-dire située entre la zone M1 et le manche 2, et deux zones M4 et M5 sont situées respectivement de chaque côté des zones M1, M2 et M3.

En variante, le découpage des zones et le nombre de zones peut être différent, le tamis 8 étant au moins divisé en deux zones M1 et M2. A titre d'exemple, la zone centrale M1 peut être circulaire et les zones M2 à M4 définir quatre quartiers répartis régulièrement autour de la zone centrale M1.

En variante, la zone d'impact de la balle sur le tamis peut être déterminée en fonction des accélérations linéaires et des vitesses angulaires de la raquette 1, à la place ou conjointement avec les mesures du capteur de vibrations.

Dans une seconde étape 102, pour chaque coup exécuté, le type de coup dans lequel ce coup peut être classé est déterminé en fonction des accélérations linéaires et des vitesses angulaires de la raquette 1 déterminées par le système de mesure.

Le type de coup est choisi parmi une liste L comprenant au moins deux coups, par exemple le coup droit et le revers. De façon avantageuse, la liste L de types de coups comprend au moins six coups parmi lesquels le coup droit à plat, c'est-à-dire sans effet, le coup droit lifté, c'est-à-dire avec un effet imprimé par une trajectoire montante de la raquette 1, le coup droit slicé, c'est-à-dire avec un effet imprimé par une trajectoire descendante de la raquette 1, le revers à plat, le revers lifté et le revers slicé.

Avantageusement la méthode selon l'invention comprend une étape préalable 100 au cours de laquelle la liste de types de coups à distinguer est choisie, par exemple par le joueur avant une série de coups.

De préférence, la liste L de types de coups inclut huit coups, parmi lesquels les six coups précités auxquels on ajoute le service à plat et le service avec effet. En variante, la liste L de types de coups peut inclure plus de huit coups.

Le nombre de coups de la liste de coups L est affecté du nombre C. Dans le cas où on détecte les huit types de coups listés ci-dessus, C est égal à 8. On note i une variable affectée à un type de coup, i étant compris entre 1 et C. On note Ni le nombre de coups d'un certain type effectués. Si on assigne au coup droit à plat la valeur i = 1, N1 est le nombre de coups droits à plat effectués lors de la série de coups. La somme des nombres de coups Ni exécutés dans chaque type de coup, pour i=1 à C, est égale au nombre total de coups exécutés lors de la série de coups étudiée.

Dans une troisième étape 103, à partir des zones d'impact déterminées à l'étape 101 et des types de coups déterminés à l'étape 102, on détermine un indice de zone Zi pour chaque type de coup i de la série de coups effectués. Si on assigne au coup droit à plat la

valeur i = 1, l'indice de zone Z1 correspondra à l'indice de zone Z calculé à partir de tous les coups droits à plat réalisés lors de la série de coups étudiée. L'indice de zone Zi pour chaque coup est l'écart-type des probabilités d'impact dans les différentes zones M1 à M5 du tamis 8. Le niveau du joueur est bon lorsque la balle impacte le tamis 8 toujours dans la même zone pour chaque type de coup, généralement la zone centrale M1 pour un coup droit à plat. Pour calculer l'écart type, on calcule pour chaque zone M1 à M5 le nombre total de fois n1, n2, n3, n4 ou n5 où la balle a frappé cette zone. La somme des nombres n1 à n5 est égale au nombre total de frappes Ni pour chaque type de coup i.

On calcule ensuite la probabilité d'impact p1 à p5 de la balle dans chaque zone M1 à M5. Par exemple, pour la première zone M1, la probabilité p1 est égale au nombre de fois n1 où la balle à frappé la zone M1, divisé par le nombre total de frappes N. Par exemple, on peut avoir p1 = 0,55, ce qui signifie que 55% des balles frappées ont impacté la zone Z1.

La somme des probabilités d'impact p1 à p5 est égale à 1. Par exemple, p1 = 0,55, p2 = 0,3, p3 =0,05, p4 = 0,05 et p5 = 0,05.

De façon optionnelle, chaque indice de zone Zi peut être multiplié par un coefficient d'étalonnage k1 permettant de normer l'indice de zone Zi, c'est-à-dire d'étalonner l'indice de zone Zi pour le ramener sur une échelle dont la valeur maximale correspond aux performances virtuelles d'un joueur qui frappe tous les coups d'un même type dans la même zone du tamis 8.

Cette valeur maximale n'est pas la même en fonction du nombre de zones M1 à M5 qui divisent le tamis. En effet, plus le nombre de zones M1 à M5 est grand et plus il est difficile pour le joueur de frapper la balle toujours dans la même zone. Si on cherche à attribuer à l'échelle une valeur maximale de 1, le coefficient d'étalonnage k1 est défini par la relation $k1 = 1/\sigma_M$, avec $\sigma_M$ l'écart-type des probabilités d'impact p1 à p5 d'un jeu parfait, pour lequel la balle frappe uniquement la zone M1 (p1 = 1 et p2 = p3 = p4 = p5 = 0). Dans l'exemple donné, $\sigma_M$= 0,44 et k1 = 1/0,44 ≈ 2,272.

Une fois que l'indice de zone Zi est calculé à l'étape 103 pour chaque type de coup i, on calcule, dans une étape 104, la valeur du paramètre P en utilisant la formule suivante :

$$P = \frac{\sum_{i=1}^{C} Zi \times Ni}{\sum_{i=1}^{C} Ni}$$

Le paramètre P est calculé en divisant la somme des produits des indices Zi par les nombres de coups Ni pour chaque type de coup i, par le nombre total de coups de la série de coups.

Le paramètre P est de préférence calculé sur une série de coups comprenant un nombre minimum de coups pour chaque type de coup. Par exemple, ce nombre de coups minimal peut être de deux coups.

Lorsque pour un ou plusieurs types de coups, le joueur n'a pas exécuté au moins dix coups, le ou les indices de zone Zi correspondant à ce ou ces types de coups sont pondérés. Dans une étape 105 préalable à l'étape 104, les indices de zones Zi concernés sont multipliés par un coefficient pondérateur k2i choisi en fonction du nombre de coups Ni effectués pour ces types de coup i. Le coefficient pondérateur k2i est croissant avec le nombre de coups Ni. Par exemple, si le joueur n'a exécuté que 9 coups droits à plat, l'indice de zone Z1 correspondant aux coups droits à plat est multiplié par un coefficient pondérateur k21 d'une valeur égale à 0,95. Si le joueur n'a exécuté que 8 coups droits à plat, le coefficient pondérateur k21 a une valeur égale à 0,8. Pour 7, 6 et 5 coups, ce coefficient k21 prend respectivement les valeurs 0,6, 0,45 et 0,3. Et ainsi de suite, avec une décroissance du coefficient en fonction de la décroissance du nombre de coups.

En variante, le nombre de coups par type en dessous duquel l'étape 105 est effectuée peut être différent de 10.

Le paramètre P reflète la capacité d'un joueur à frapper les coups dans les mêmes zones pour chaque type de coup et à utiliser un éventail varié de coups. Si par exemple un premier joueur frappe presque tous ses coups droits à plats dans la même zone mais utilise peu les coups droits avec effets, son paramètre P sera moins élevé que celui d'un second joueur qui frappe son coup droit avec une plus grande variété d'effets, tout en frappant presque tous ses coups dans la même zone.

Selon un mode de réalisation non représenté de l'invention, la méthode de calcul du paramètre P peut comprendre une étape supplémentaire consistant à calculer la cadence de jeu du joueur pendant la série de coups. La cadence de jeu correspond, par exemple, au rapport du nombre de coups sur le temps effectif de jeu. La valeur du paramètre P est pondérée sur la base de la valeur de la cadence de jeu. Ainsi, le paramètre P reflète un aspect supplémentaire du niveau technique du joueur, qui est sa faculté à maintenir sa précision de zones de frappe sur le tamis lors d'échanges à haute intensité.

Selon un autre mode de réalisation non représenté de l'invention, la méthode de calcul du paramètre P peut comprendre une étape supplémentaire consistant à calculer la puissance moyenne développée par le joueur au cours de la série de coups. La puissance moyenne est obtenue en calculant la moyenne des puissances développées par le joueur lors de chaque coup de la série de coups. La puissance développée lors de chaque coup est calculée sur la base d'un rapport entre la vitesse angulaire et l'accélération linéaire de la raquette mesurées par le système de mesure. La valeur du paramètre P est ensuite pondérée sur la base de la valeur

de la puissance moyenne. Ainsi, le paramètre P reflète un aspect supplémentaire du niveau technique du joueur, qui est sa faculté à maintenir sa précision de zones de frappe sur le tamis tout en jouant des coups à une puissance élevée.

Les caractéristiques des modes de réalisation et variantes décrits ci-dessus peuvent être combinées pour former de nouveaux modes de réalisation de l'invention.

## Revendications

**1.** Méthode de calcul d'un paramètre représentatif du niveau technique d'un joueur de tennis lors d'une série de coups, **caractérisée en ce qu'**elle comprend les étapes suivantes :

- a) déterminer (101), pour chaque coup exécuté lors de la série de coups, une zone d'impact du coup sur le tamis (8) d'une raquette (1) de tennis que le joueur utilise ;
- b) déterminer (102), pour chaque coup exécuté lors de la série de coups, le type de ce coup, le type de coup étant choisi parmi une liste (L) comprenant au moins deux types de coups ;
- c) à partir des zones d'impact déterminées à l'étape a) et des types de coups déterminés à l'étape b) pour la série de coups, déterminer (103) un indice de zone (Zi) pour chaque type de coup de la série de coups ;
- d) à partir des indices de zone calculés à l'étape c), calculer (104) la valeur du paramètre (P) en utilisant la formule suivante :

$$P = \frac{\sum_{i=1}^{C} Zi \times Ni}{\sum_{i=1}^{C} Ni}$$

où :

- P est le paramètre représentatif,
- C est le nombre de types de coups,
- Zi, avec i compris entre 1 et C, est l'indice de zone pour chaque coup, et
- Ni est le nombre de coup effectués pour chaque type de coup i.

**2.** Méthode selon la revendication 1, **caractérisée en ce que** le paramètre (P) est calculé sur une série de coups comprenant un nombre minimum de coups pour chaque type de coup.

**3.** Méthode selon l'une des revendications précédentes, **caractérisée en ce que** la liste (L) de types de coups comprend au moins six types de coups.

**4.** Méthode selon la revendication 3, **caractérisée en ce que** la liste (L) de types de coups comprend au moins huit types de coups parmi lesquels : le coup droit à plat, le coup droit lifté, le coup droit slicé, le revers à plat, le revers lifté, le revers slicé, le service à plat et le service avec effet.

**5.** Méthode selon l'une des revendications précédentes, **caractérisée en ce que** lorsque pour un ou plusieurs types de coups, le joueur n'a pas exécuté un nombre seuil de coups, le ou les indices de zone (Zi) correspondant à ce ou ces types de coups est multiplié (105) par un coefficient pondérateur (kZi) choisi en fonction du nombre de coups (Ni) exécutés pour ce ou ces types de coup, le coefficient pondérateur (k2i) étant croissant avec le nombre de coups (Ni).

**6.** Méthode selon l'une des revendications précédentes, **caractérisée en ce que** le tamis (8) de la raquette (1) est divisé en au moins deux zones (M1,M2), de préférence en cinq zones (M1-M5).

**7.** Méthode selon l'une des revendications précédentes, **caractérisée en ce qu'**elle comprend, avant l'étape b), une étape préalable (100) consistant à choisir les types de coups de la liste (L) de types de coups.

**8.** Méthode selon l'une des revendications précédentes, caractérisée en ce chaque indice de zone (Zi) est multiplié par un coefficient d'étalonnage (k1) permettant de normer cet indice de zone sur une échelle dont la valeur maximale correspond aux performances virtuelles d'un joueur qui frappe tous les coups d'un même type dans la même zone du tamis (8).

**9.** Méthode selon l'une des revendications précédentes, **caractérisée en ce qu'**à l'étape b), le type de coup exécuté est déterminé en fonction des accélérations linéaires et des vitesses angulaires de la raquette (1).

**10.** Méthode selon l'une des revendications précédentes, **caractérisée en ce qu'**à l'étape a), la zone d'impact (M1-M5) de chaque coup est déterminée par des mesures de vibrations dans la raquette (1) et/ou en fonction des accélérations linéaires et des vitesses angulaires de la raquette (1).

**11.** Méthode selon l'une des revendications précédentes, **caractérisé en ce qu'**elle comprend une étape supplémentaire consistant à calculer la cadence de jeu du joueur pendant la série de coups et à pondérer la valeur du paramètre (P) sur la base de la valeur de la cadence de jeu.

**12.** Méthode selon l'une des revendications précédentes, **caractérisée en ce qu'**elle comprend une étape supplémentaire consistant à calculer la puissance moyenne développée par le joueur au cours de la série de coups, et à pondérer la valeur du paramètre (P) sur la base de la valeur de la puissance moyenne.

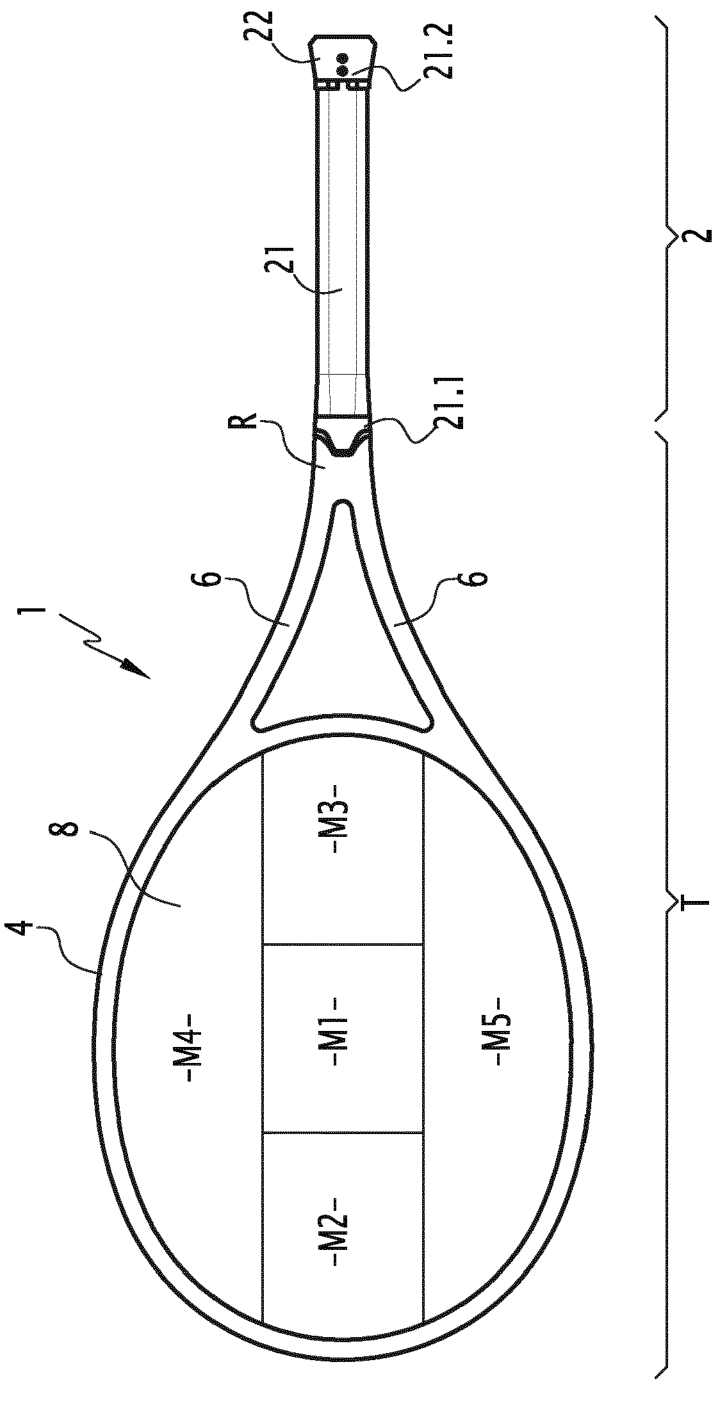


FIG.1

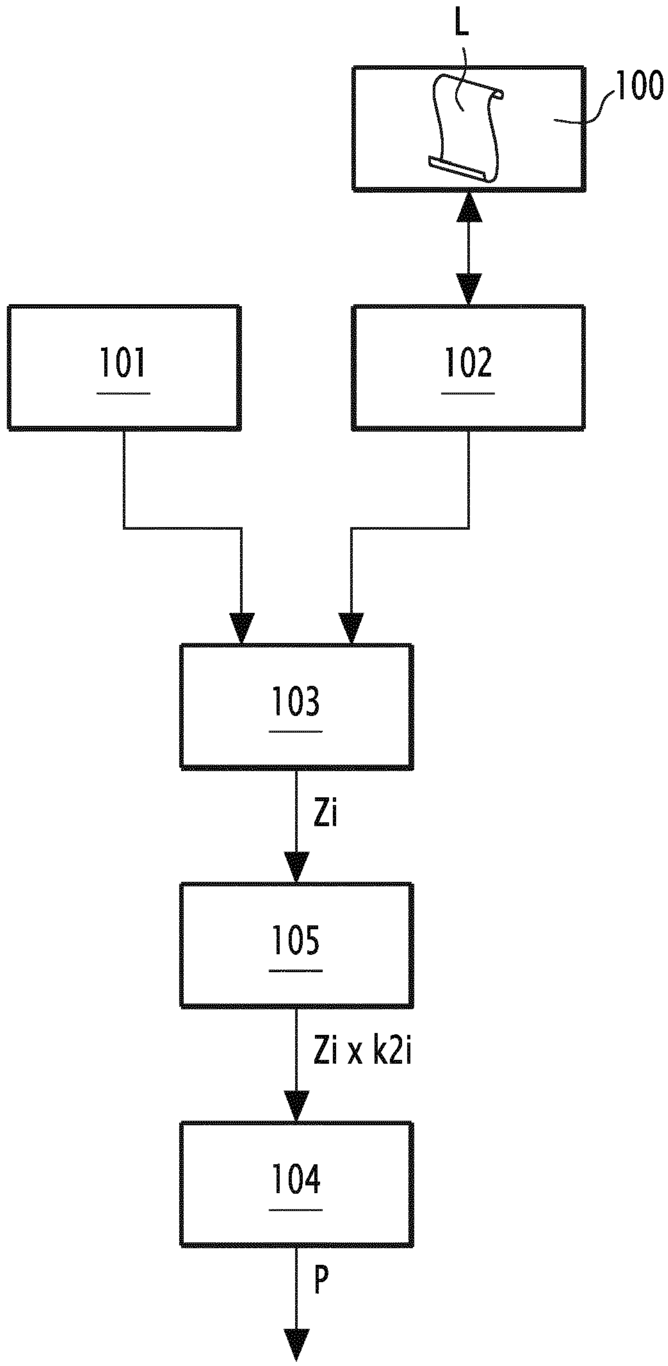


FIG.2

Europäisches Patentamt
European Patent Office
Office européen des brevets

# RAPPORT DE RECHERCHE EUROPEENNE

Numéro de la demande
EP 14 18 1479

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | WO 2013/029191 A1 (KITRIS AG [CH]; ZUEGER CHRISTIAN [CH]) 7 mars 2013 (2013-03-07)<br>* le document en entier *<br>----- | 1-12 | INV.<br>A63B69/38<br>G09B19/00 |
| Y | US 2011/183787 A1 (SCHWENGER RALF [DE] ET AL) 28 juillet 2011 (2011-07-28)<br>* le document en entier, en particulier l'alinéa [40] *<br>----- | 1-12 | |
| A | US 5 757 266 A (RIDER ALAN J [US] ET AL) 26 mai 1998 (1998-05-26)<br>* abrégé *<br>----- | 1-12 | |

DOMAINES TECHNIQUES RECHERCHES (IPC)

A63B
G09B

Le présent rapport a été établi pour toutes les revendications

1

| Lieu de la recherche | Date d'achèvement de la recherche | Examinateur |
|---|---|---|
| Munich | 8 septembre 2014 | Lerbinger, Klaus |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................................
& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 14 18 1479

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-09-2014

| Document brevet cité au rapport de recherche | Date de publication | Membre(s) de la famille de brevet(s) | Date de publication |
|---|---|---|---|
| WO 2013029191 A1 | 07-03-2013 | CH 705403 A1 | 28-02-2013 |
| | | CN 103857446 A | 11-06-2014 |
| | | EP 2747853 A1 | 02-07-2014 |
| | | US 2014206481 A1 | 24-07-2014 |
| | | WO 2013029191 A1 | 07-03-2013 |
| US 2011183787 A1 | 28-07-2011 | CN 102686285 A | 19-09-2012 |
| | | DE 202010018140 U1 | 13-05-2014 |
| | | DE 202010018141 U1 | 13-05-2014 |
| | | DE 202010018142 U1 | 13-05-2014 |
| | | EP 2480292 A2 | 01-08-2012 |
| | | EP 2752223 A1 | 09-07-2014 |
| | | EP 2752224 A1 | 09-07-2014 |
| | | JP 2013505761 A | 21-02-2013 |
| | | US 2011183787 A1 | 28-07-2011 |
| | | US 2014141907 A1 | 22-05-2014 |
| | | WO 2011036567 A2 | 31-03-2011 |
| US 5757266 A | 26-05-1998 | AUCUN | |

EPO FORM P0460

Pour tout renseignement concernant cette annexe : voir Journal Officiel de l'Office européen des brevets, No.12/82